# EUROPEAN PATENT SPECIFICATION

(11) **EP 0 863 710 B1**
(45) Date of publication and mention of the grant of the patent: **28.11.2001**
(21) Application number: 96932854.1
(22) Date of filing: 20.09.1996
(51) Int. Cl.: A23B 5/005

(54) **A METHOD AND A DEVICE FOR TREATING A LIQUID EGG PRODUCT**
VERFAHREN UND GERÄT ZUR BEHANDLUNG VON FLÜSSIGEIPRODUKTEN
PROCEDE ET DISPOSITIF DE TRAITEMENT D'UN PRODUIT LIQUIDE A BASE D'OEUF

(30) Priority: 21.09.1995 NL 1001250
(43) Date of publication of application: 16.09.1998
(73) Proprietor: DEN HOLLANDER ENGINEERING B.V., NL-4207 HE Gorinchem (NL); Cutler Dairy Products, Inc., Philadelphia, PA 19140-5599 (US)
(72) Inventor: DEN HOLLANDER, Adriaan, Gerrit, NL-4207 HE Gorinchem (NL); ROS, Albert, Jacobus, NL-8071 DA Nunspeet (NL); CUTLER, Joel, Philadelphia, PA 19140-5599 (US)
(74) Representative: Louet Feisser, Arnold
(86) International application number: PCT/NL96/00368
(87) International publication number: WO 97/10718

(56) References cited:
- EP-A- 0 179 946
- WO-A-90/09109
- FR-A- 1 315 134
- FR-A- 2 609 601
- GB-A- 627 339
- GB-A- 818 003
- US-A- 3 166 424
- US-A- 4 853 238
- US-A- 5 019 407
- PATENT ABSTRACTS OF JAPAN vol. 7, no. 213 (C-187), 20 September 1983 & JP,A,58 111663 (MEIJI TADAAKI), 2 July 1983,

## Description

The invention relates to a method for treating a liquid egg product substantially consisting of egg white and/or egg yolk in order to obtain an extended shelf life ("ESL"), wherein said egg product is subjected to a brief heat treatment at a temperature of more than 78 °C.

This method is disclosed in US-A-4,853,238, whereby a liquid egg white containing mix is heated by utilizing a microwave and afterwards it is cooled by a heat exchanger.

Also the use of a pateurization treatment is a generally known method which is for example described in US-A-4,808,425. According to this publication an egg product is subjected to a temperature of 63 - 72 °C for a period of time ranging from a few seconds to more than three minutes. The egg product is heated to the desired temperature by means of a plate-type heat exchanger, and after having been maintained at that temperature for a sufficiently long period of time the egg product is cooled down to a temperature below 10 °C and subsequently packed. According to the aforesaid publication a more intensive heat treatment will result in coagulation of the egg product, especially the loss of solubility of protein, which amounts to more than 15%, will be unacceptable. The loss of functional properties of the egg product, which is still acceptable according to the aforesaid publication, imposes considerable limitations with regard to the applications of the pasteurized egg product, however.

Although the known pasteurization treatment will result in an egg product having a reasonable shelf life, dependent on the quality of the basic product and the setting of the treatment plant, there is a need of a method for treating a liquid egg product, which makes it possible, by using a reliable process, to obtain an egg product having an extended shelf life which meets all quality requirements and whose functional properties have hardly diminished, if at all.

The object of the invention is to provide a method for treating a liquid egg product wherein the above requirements are met.

In order to accomplish that objective the said brief heat treatment is carried out by means of steam infusion, whereby the egg product is prevented from coming into contact with a hot surface of a piece of solid matter and wherein said egg product afterwards is subjected to a pasteurization treatment, whereby said egg product is maintained at a temperature of more than approx. 60 °C for some time, for example a few minutes.

Preferably this brief heat treatment may last less than 1.5 seconds, preferably less than 1 second, and even more preferably less than 0.6 seconds.

Tests have shown that when the usual pasteurization treatment of an egg product is combined with a brief heat treatment to a relatively high temperature, an egg product having a long shelf life is obtained, whose functional properties have hardly diminished, if at all, whilst an unexpectedly high bacteria extermination rate is achieved.

Preferably the temperature increase required for the brief heat treatment takes place very quickly, as does the temperature decrease following the brief heat treatment, so that the intended treatment of the egg product substantially takes place at the desired, relatively high temperature and the egg product is only subjected to a lower temperature for a brief period of time, said lower temperature still being so high, however, that it may have an adverse effect on the egg product, for example coagulation thereof.

Preferably at least the latter part of the temperature increase, over at least 30 °C, preferably over more than 40 °C, for the brief heat treatment is preferably carried out in less than 1 second, preferably less than 0.6 seconds.

Preferably the temperature decrease of more than 30 °C, preferably more than 40 °C, following the brief heat treatment may take place within 0,5 seconds, preferably 0.2 seconds.

Furthermore the temperature decrease following said brief heat treatment may be carried out by expanding the egg product.

Steam infusion, a technique which is known per se, for example from WO-91/02185, wherein a so-called downflow heater is disclosed, will provide a very quick heating of the egg product to the desired temperature, which temperature can be adjusted with great accuracy, whereby temperature differences within the egg product are minimized. Moreover, any contact between the egg product and a solid, heated surface, which might interfere with the process, is avoided.

It is preferred to use a process called flashing for the quick temperature decrease after the brief heat treatment, wherein the liquid expands while water vapour is being released, whereby the desired temperature decrease takes place. If the flash vessel is correctly adjusted the desired temperature decrease may take place in such a manner that the desired amount of water which is added to the egg product during the steam infusion is extracted from the egg product again, whilst furthermore any foaming of the egg product is eliminated by breaking of the foam bubbles as a result of said evaporation. This latter elimination of the foam is moreover stimulated by mechanical contact between the egg product and the wall of the flash vessel.

In a preferred embodiment the egg product is first heated to a temperature of 50 - 55 °C before the egg product is subjected to the brief heat treatment at the temperature of more than 78 °C. As a result of this pre-heating of the egg product, which may take place by means of a usual heat exchanger and wherein the heat being released may be utilized in cooling the egg product at a later stage, a good starting temperature may be obtained for a quick heating at the aforesaid steam infusion, which takes place in a downflow heater.

In order to more fully explain the invention an embodiment of the method for treating an egg product will be described with reference to the drawing.
Figure 1 is a schematic illustration of an installation for carrying out the treatment; and
Figure 2 graphically illustrates the temperature curve of the egg product during the treatment.

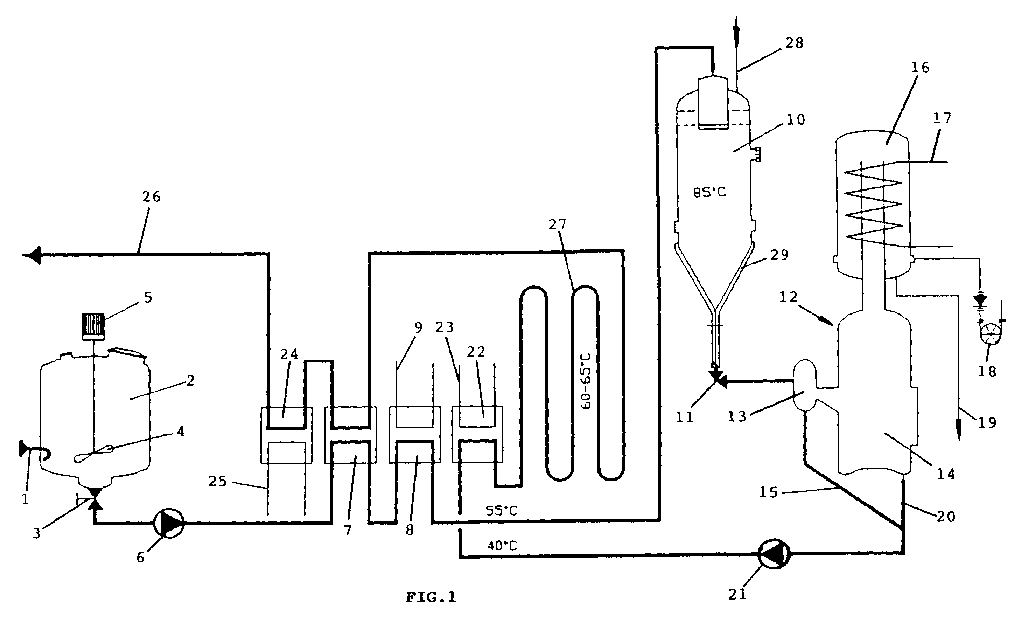

Figure 1 only shows the main components, whilst further components which are generally known, such as measurement and control apparatus, are not shown.

The egg product of the embodiment consists of the liquid portion of a whole egg, that is, both the egg white and the egg yolk, wherein any further additives, such as sugars or salt may be present.

According to Figure 1 the liquid egg product is charged to tank 2 by means of pipe 1, in which tank the egg product is maintained at a temperature of 2 °C until the egg product is discharged from tank 2 by operating cock 3. During its stay in tank 2 the egg product is mixed by stirring means 4, which is driven by motor 5, so that a homogeneous liquid is obtained. After exiting tank 2 the egg product is carried to heat exchanger 7 and then to heat exchanger 8 by means of pump 6. In heat exchanger 7 a first heating of the egg product takes place, utilizing heat which is withdrawn during the cooling of the egg product at a later stage. In heat exchanger 8 further heating to 55 °C takes place by heat exchange with a pipe 9, through which hot water flows, for example.

After exiting the heat exchanger 8 the egg product, which has a temperature of 55 °C, is carried to the heat exchanger 10, in which the egg product is very quickly heated to a temperature of 85 °C. Steam is supplied to the downflow heater 10 via pipe 28 for that purpose. Such a downflow heater 10 is disclosed in WO-91/02185, which publication is to be considered incorporated herein by this reference.

Inside the downflow heater 10 the egg product is heated to 85 °C in 0.6 seconds, after which this temperature is maintained for 0.5 seconds. For an adequate operation it is important that both the temperature increase and the achieved temperature are uniformly spread over the egg product, which can be achieved by means of a properly adjusted downflow heater (10).

The downflow heater (10) is double-walled near its bottom side, so that a space 29 is created, through which a coolant, for example ice water, may be passed in order to cool the wall at that location.

The discharge cock 11 of the downflow heater 10 is controlled in such a manner that after having stayed inside the downflow heater 10 for the required period of time the egg product is discharged to the flash vessel 12, which is provided with a first chamber 13 and a second chamber 14.

Cooling to 40 °C thereby takes place in 0.1 seconds, because the egg product present in chamber 13 will expand as a result of the pressure inside the flash vessel 12 being kept lower than the pressure inside the downflow heater 10. During this so-called flashing process the temperature decreases and water vapour is released. Preferably said expansion process is controlled in such a manner that all the water added in the downflow heater is removed from the egg product again. Furthermore it is important that any foam that has formed in the egg product is removed, on the one hand as a result of the egg product hitting the wall of the flash vessel 12, whilst on the other hand the evaporation process of the water causes the bubbles that are present to disintegrate.

The water vapour being extracted is condensed in condenser 16, which is provided with a cooling spiral 17, for example a pipe through which cold water flows. The low pressure inside the flash vessel 12 is maintained by means of vacuum pump 18, whilst the condensed water is discharged through pipe 19. The egg product which has not exited from the flash chamber 13 via pipe 15 exits the flash vessel via chamber 14 and pipe 20. The egg product is pumped along by means of fluid pump 21, during which pumping the egg product has a temperature of 40 °C.

The egg product is then carried to heat exchanger 22 in order to be heated to a temperature of 60 - 65 °C, namely by means of hot water which flows through pipe 23. Subsequently the egg product flows into a well-insulated pipe 27, whose total capacity in relation to the flow rate, determines how long the egg product will be maintained at the said temperature of 60 - 65 °C. This part of the treatment corresponds with the known and generally used pasteurization treatment of a liquid.

The egg product then flows to heat exchanger 7 and heat exchanger 24 respectively. In heat exchanger 7 heat is exchanged with the egg product, which must be heated from a temperature of 2 °C, so that the amount of heat which is lost is reduced. In heat exchanger 24 further cooling to a temperature of 2 °C takes place by means of heat exchange with cold water flowing through pipe 25.

Then the treated egg product is carried, by means of pipe 26, to a machine which packs the egg product in desired quantities. The egg product treated and packed in this manner has a long shelf life and a very high quality.

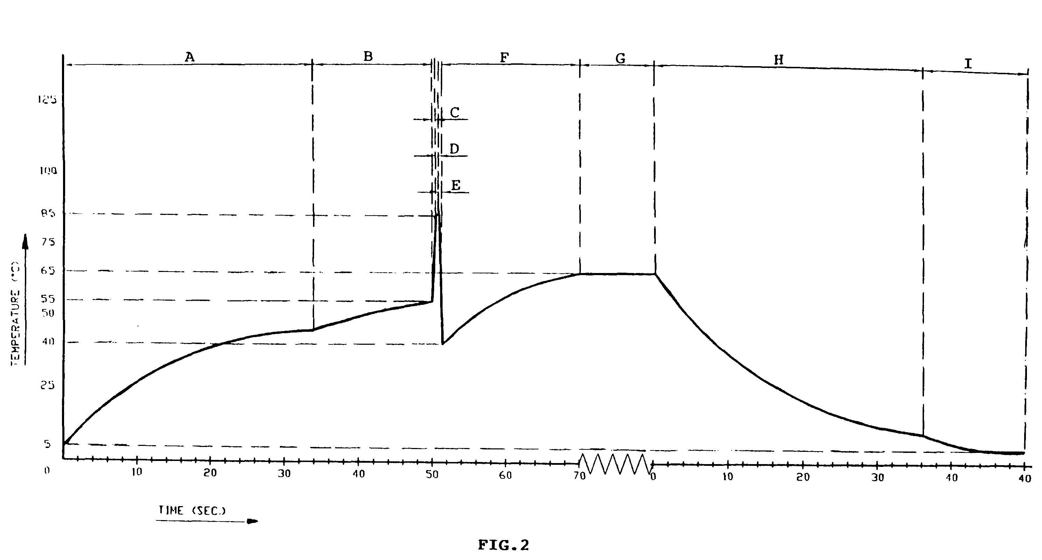

Figure 2 shows the temperature curve of the egg product during the treatment process according to the embodiment. The temperature (in °C) is set out on the vertical axis and the time (in seconds) is set out on the horizontal axis. The duration of the various treatment steps is indicated by the letters A - I.

After the egg product has exited tank 2 and is carried to heat exchanger 7 by means of pump 6, heating in heat exchanger 7 and heat exchanger 8 respectively starts at time O. The capacity of heat exchanger 7 is such that the egg product stays therein for 34 seconds (period A), whilst heat is being exchanged with the egg product, which is cooled during the latter stage of the treatment. The egg product is thereby heated to a temperature of 45 °C.

Then the egg product stays in heat exchanger 8 for 16 seconds (period B), whereby the egg product is further heated to 55 °C. After 50 seconds (periods A and B) have lapsed from time 0, the egg product having this temperature is charged to the downflow heater, where it is heated to a temperature of 85 °C, and that in 0.6 seconds (period C). After being maintained at this temperature for 0.5 seconds (period D), the temperature of the egg product will decrease to 40 °C in 0.1 seconds (period E) as a result of being expanded in flash vessel 12. Following this reheating of the egg product takes place in heat exchanger 22, whereby the egg product is heated to a temperature of 65 °C in 19 seconds (period F), which temperature is maintained for a few minutes. In the embodiment this period is 5 minutes (period G). The egg product thereby flows through a well-insulated pipe 27, whose capacity is sufficient to realize the desired duration.

After this pasteurization treatment cooling takes place for 36 seconds (period H), namely in heat exchanger 7, whereby heat is exchanged with the egg product to be heated. Further cooling to 2 °C takes place in heat exchanger 24 for 14 seconds (period I).

The process described in this embodiment appears to result in an egg product of a very high quality, both with regard to taste and shelf life and with regard to all other functional properties. Furthermore the method used appears to be very reliable, that is, relatively minor disruptions of the process appear to have hardly any effect on the quality of the treated egg product.

A number of tests have been carried out with various time/temperature combinations, inter alia in accordance with the method disclosed in the embodiment. During said testing a batch of 5,000 kg egg product substantially consisting of mixed egg white and egg yolk was treated with a flow rate of 2,000 litres per hour. Following said treatment the pasteurized product was packed antiseptically in a number of packages, which were stored at a temperature of approx. 3 °C.

The basic product had a solid matter content of 23.2% (± 0.5), a whippability of 0.19 (i.e. the specific mass in g/cm³ of 250 g whole egg plus 125 g sugar, whipped in a Hobart N50 mixer for 10 minutes at a temperature of approx. 22 °C) and a viscosity of 11 cps (±1). Further specification:

| | |
|---|---|
| Germ count | 210,000 per gramme |
| Coliform bacteria | 5,000 per gramme |
| Bacillus cereus | 800 per gramme |
| Streptococci | 4,000 per gramme |
| Staphylococcus aurous | 60 per gramme |
| Ferments | 1,000 per gramme |
| Fungi | 300 per gramme |
| E-coli | pos. per 10 grammes |
| Salmonella | pos. per 25 grammes |

During a period of 10 weeks one package was opened each week and its contents were examined, each time with the following results:

| | |
|---|---|
| Germ count | < 1,000 per gramme |
| Coliform bacteria | < 10 per gramme |
| Bacillus cereus | < 10 per gramme |
| Streptococci | < 10 per gramme |
| Staphylococcus aurous | < 100 per gramme |
| Ferments | < 10 per gramme |
| Fungi | < 10 per gramme |
| E-coli | neg. per 10 grammes |
| Salmonella | neg. per 25 grammes |
| Listeria monocystis | neg. per 25 grammes |
| Sulphite-reducing bacteria | < 10 per gramme |

The functional and physical properties of the treated egg product appeared to have remained practically unchanged.

## Claims

1. A method for treating a liquid egg product substantially consisting of egg white and/or egg yolk in order to obtain an extended shelf life ("ESL"), wherein said egg product is subjected to a brief heat treatment at a temperature of more then 78 °C, **characterized in that** said brief heat treatment is carried out by means of steam infusion, whereby the egg product is prevented from coming into contact with a hot surface of a piece of solid matter and wherein said egg product afterwards is subjected to a pasteurization treatment, whereby said egg product is maintained at a temperature of more than approx. 60 °C for some time, for example a few minutes.

2. A method according to claim 1, **characterized in that** said brief heat treatment lasts less than 1.5 seconds, preferably less than 1 second, and/or takes place at a temperature of more than 80 °C, prerably more than 85 °C.

3. A method according to any one of the preceding claims, **characterized in that** with the brief heat treatment at least the latter part of the temperature increase, over at least 30 °C, preferably over more than 40 °C, takes place in less than 1 second, preferably less than 0.6 seconds.

4. A method according to any one of the preceding claims, **characterized in that** after said brief heat treatment a temperature decrease of more than 30 °C, preferably more than 40 °C, takes place within 0,5 seconds, preferably 0.2 seconds.

5. A method according to any one of the preceding claims, **characterized in that** said temperature decrease following said brief heat treatment is carried out by expanding said egg product.

6. A method according to any one of the preceding claims, **characterized in that** said egg product is first heated to a temperature of 40 - 60 °C, preferably 50 - 55 °C, before said brief heating of the egg product takes place.

## Patentansprüche

1. Verfahren zur Behandlung von Flüssigeiprodukten, die im wesentlichen aus Eiweiß und/oder Eigelb bestehen, um eine längere Haltbarkeit ("ESL") zu erhalten, wobei das Eiprodukt einer kurzen Wärmebehandlung bei einer Temperatur von mehr als 78 °C unterzogen wird, **dadurch gekennzeichnet, daß** die kurze Wärmebehandlung mittels Dampfinfusion durchgeführt wird, wodurch das Eiprodukt daran gehindert wird, mit einer heißen Oberfläche eines Stückes aus festem Material in Kontakt zu kommen, und wobei das Eiprodukt danach einer Pasteurisationsbehandlung unterzogen wird, wodurch das Eiprodukt auf einer Temperatur von mehr als näherungsweise 60 °C für eine gewisse Zeit, z. B. einige Minuten, gehalten wird.

2. Verfahren nach Anspruch 1, **dadurch gekennzeichnet, daß** die kurze Wärmebehandlung weniger als 1,5 Sekunden, vorzugsweise weniger als 1 Sekunde, dauert und/oder bei einer Temperatur von mehr als 80 °C, vorzugsweise mehr als 85 °C stattfindet.

3. Verfahren nach irgendeinem der vorangehenden Ansprüche, **dadurch gekennzeichnet, daß** mit der kurzen Wärmebehandlung wenigstens der letzte Teil des Temperaturanstiegs, über wenigstens 30 °C, vorzugsweise über mehr als 40 °C, in weniger als einer Sekunde, vorzugsweise weniger als 0,6 Sekunden stattfindet.

4. Verfahren nach irgendeinem der vorangehenden Ansprüche, **dadurch gekennzeichnet, daß** nach besagter kurzer Wärmebehandlung ein Temperaturabfall von mehr als 30 °C, vorzugsweise mehr als 40 °C, innerhalb von 0,5 Sekunden, vorzugsweise 0,2 Sekunden stattfindet.

5. Verfahren nach irgendeinem der vorangehenden Ansprüche, **dadurch gekennzeichnet, daß** der besagter kurzer Wärmbehandlung folgende Temperaturabfall durch Expandieren besagten Eiproduktes durchgeführt wird.

6. Verfahren nach irgendeinem der vorangehenden Ansprüche, **dadurch gekennzeichnet, daß** das Eiprodukt als erstes auf eine Temperatur von 40 - 60 °C, vorzugsweise 50 - 55 °C erwärmt wird, bevor besagtes kurzes Erwärmen des Eiproduktes stattfindet.

## Revendications

1. Procédé de traitement d'un produit d'oeuf liquide constitué essentiellement de blanc d'oeuf et/ou de jaune d'oeuf de façon à obtenir une durée de conservation prolongée en rayons ("ESL"), dans lequel ledit produit d'oeuf est soumis à un bref traitement thermique à une température supérieure à 78°C, **caractérisé en ce que** ledit bref traitement thermique est effectué au moyen d'une infusion à la vapeur, grâce à quoi le produit d'oeuf est empêché de venir en contact avec la surface chaude d'une pièce d'un matériau solide dans lequel ledit produit d'oeuf est ensuite soumis à un traitement de pasteurisation, dans lequel ledit produit d'oeuf est maintenu à une température supérieure à environ 60°C pendant un certain temps, par exemple quelques minutes.

2. Procédé selon la revendication 1, **caractérisé en ce que** ledit bref traitement thermique dure moins de 1,5 seconde, de préférence moins de 1 seconde, et/ou s'effectue à une température supérieure à 80°C, et de préférant supérieure à 85°C.

3. Procédé selon l'une quelconque des revendications précédentes, **caractérisé en ce que** dans le bref traitement thermique au moins la dernière partie de l'accroissement de la température, au-dessus d'au moins 30°C, et de préférence au-dessus de 40°C, s'effectue en moins de 1 seconde, de préférence en moins de 0,6 seconde.

4. Procédé selon l'une quelconque des revendications précédentes, **caractérisé en ce qu'**après ledit bref traitement thermique une réduction de la température de plus de 30°C, de préférence de plus de 40°C, s'effectue en 0,5 seconde, de préférence en 0,2 seconde.

5. Procédé selon l'une quelconque des revendications précédentes, **caractérisé en ce que** ladite réduction de température à la suite dudit bref traitement thermique est réalisée par détente dudit produit d'oeuf.

6. Procédé selon l'une quelconque des revendications précédentes, **caractérisé en ce que** ledit produit d'oeuf est d'abord chauffé jusqu'à une température de 40-60°C, de préférence 50-55°C, avant que ne s'effectue ledit bref chauffage du produit d'oeuf.
